Europäisches Patentamt

European Patent Office

Office européen des brevets

(11) Publication number: **0 453 573 A1**

# EUROPEAN PATENT APPLICATION
## published in accordance with Art. 158(3) EPC

(21) Application number: 90916359.4

(22) Date of filing: 13.11.90

(86) International application number:
PCT/JP90/01474

(87) International publication number:
WO 91/07330 (30.05.91 91/12)

(51) Int. Cl.5: **B65D 45/32**, B65B 51/02

(30) Priority: 13.11.89 JP 132245/89 U
22.08.90 JP 88084/90 U
22.08.90 JP 88085/90 U

(43) Date of publication of application:
30.10.91 Bulletin 91/44

(84) Designated Contracting States:
DE DK FR GB IT SE

(71) Applicant: SEKISUI KAGAKU KOGYO
KABUSHIKI KAISHA
4-4 Nishitemma 2-chome Kita-ku
Osaka-shi Osaka 530(JP)

(72) Inventor: HOKARI, Fumio
6-18, Oji-cho Myojin 2-chome
Kitakatsuragi-gun
Nara 636(JP)

(74) Representative: Senior, Alan Murray et al
J.A. KEMP & CO., 14 South Square Gray's Inn
London WC1R 5LX(GB)

(54) SEALED VESSEL AND METHOD OF MANUFACTURING THE SAME.

(57) A sealed vessel suitable for preserving articles such as processed food, beverage, wax, paints, adhesives, pharmaceutical products and cosmetics, and particularly those that cannot be used up in one use and a method of manufacturing the sealed vessel. The vessel consists of: a main body (1) and a lid (2) that can be put over or coupled to an opening (11) of the main body. The opening (11) is covered with the lid (2), and an annular molded article (4) made of a thermoplastic resin is provided over the joint (3) between the main body (1) and the lid (2) so as to seal the joint (3). The annular molded article (4) is formed by injection molding.

Fig. 1

Technical Field

The present invention relates to a closed container suitable for containment and preservation of processed foods, beverages, waxes, paints, adhesives, drugs, cosmetics, etc. which are not used up at a time, and a method of manufacturing the closed container.

Background Technology

Metal containers used for canning purposes are capable of preserving the contents over long periods of time but have the inconvenience that they cannot be opened without the aid of a can opener.

Therefore, pull-top type metal containers which can be easily opened without a can opener have been devised and are dominant metallic containers today.

The metal container of this type consists of a containing body and a cover plate which is formed with an attenuation line along its opening contour and a grip means with which the cover plate can be pulled inwardly of the attenuation line. As to the method of closing such a container, it is closed by clinching the open edge of the containing body and the peripheral part of the cover plate just as in the case of the aforementioned can. On the other hand, to open such a container, the grip means is cocked up and the opening area of the cover plate is torn off along the attenuation line.

Recently, for enhancing the value added to products (contents) in terms of sales promotion, or differentiating the products from competitive brands, not only the above ease of opening but fashionable features and the ease of disposal have come to be demanded. For these reasons, there has been proposed a diversity of synthetic resin containers taking the place of metal containers.

Of them, the most widely adopted is a container consisting of a synthetic resin containing body and a metallic or synthetic resin sheet or film lid member. This kind of container is generally provided with a flange along the open peripheral edge of the body, with said lid member being bonded to the upper surface of the flange by means of an adhesive or by heat sealing or high-frequency sealing. Many containers of this type are each provided with a grip means at the peripheral part of the lid member and the containers are opened by holding this grip means with fingers and pulling off the lid member from the flange of the containing body.

However, while the aforementioned metal containers and synthetic resin containers are advantageous in sealing effect and ease of opening, they have the drawback of inconvenience in handling after opening. Thus, none of these types of containers are in forms permitting reuse of the lid member (lid material) so that once the containers are opened, they cannot be reclosed with the lid member. Therefore, when it is desired to preserve the remainder of the content after consumption, there is the problem that one must have a vessel with a cover available on hand and transfer the remainder to the vessel or reclose the open end of the container with wrapping film.

Furthermore, in the case of said pull-top metal container, a fairly large force is required for opening and chances are that one tears the lid member off with an unnecessarily large force, sometimes a force large enough to spill the contents. There also is the danger that one injures one's own fingers in unsealing the container.

The present invention has been developed to overcome the above disadvantages of the prior art and provides a closed container which is not only conducive to a hermetic seal between the container body and the lid member and easy to open but permits reuse of the lid member after opening and a method of manufacturing such a closed container.

Disclosure of the Invention

The closed container according to the present invention comprises a containing body and a lid member which can be lapped over or fitted to an open part of said containing body, wherein the open part of the containing body is closed with the lid member and the joint between the body and lid member is sealed by an annular member of thermoplastic resin bonded thereto.

The closed container of this invention may also comprise a containing body and a lid member to be lapped over or fitted to an open part of the containing body, wherein the containing body is provided with a lid-supporting part of predetermined width along the peripheral portion of the open part and the lid member is provided with a contacting part to be abutted against said lid-supporting part along its peripheral portion, with said lid-supporting part and contacting part being enclosed and covered by an annular member of thermoplastic resin after the lid member has been set in position on the containing body.

The method of manufacturing a closed container according to the present invention comprises filling a material to be packaged into a containing body, closing an open end of said containing body by lapping or fitting a lid member over or to the opening end, setting the containing body and the lid member as a unit in an injection mold having an annular cavity in a position corresponding to a joint between said containing body and lid member, injecting a thermoplastic resin into said cavity of the mold to form an annular groove sealing said joint between said containing body and lid member.

The method of manufacturing a closed container of this invention may also comprise filling a material to be packaged into a containing body having a lid-supporting part of predetermined width along the peripheral portion of its open part, lapping or fitting a lid member having a contacting part for engaging said lid-supporting part along its peripheral part over or to said open part of the containing body to cover the container, setting the covered containing body in an injection mold having a cavity shaped to enclose the lid-supporting part of the containing body and the contacting part of the lid member, injecting a thermoplastic resin into said cavity of the mold to form an annular member enclosing and covering said lid-supporting part and contacting part.

To open the closed container of the invention, the annular member is slit along the joint between the containing body and the lid member with a cutter means or the annular member as a whole is peeled off and the lid member is then detached from the containing body. In this procedure, the lid member is not deformed at all. Moreover, since the lid member can be lapped over or fitted to the containing body, the container once opened can be reclosed by replacing the lid member in position on the containing body.

In the method of manufacturing a closed container in accordance with the invention wherein the annular member is formed by injection molding, a uniform sealing of the entire circumference of the container is assured even if the joint between the containing body and the lid member is intricate in shape. Moreover, since the annular member as such can be molded with high dimensional accuracy, it does not happen that the appearance of the container is adversely affected by the presence of the annular member.

Brief Description of the Drawings

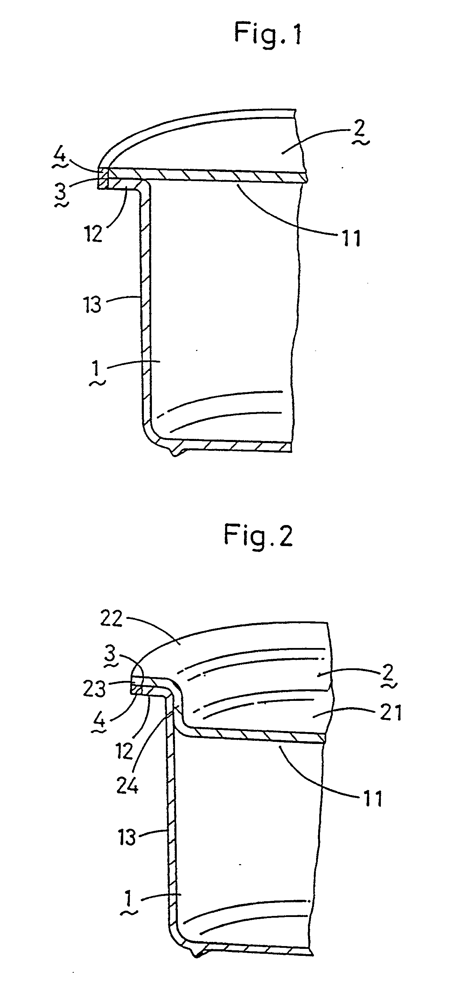

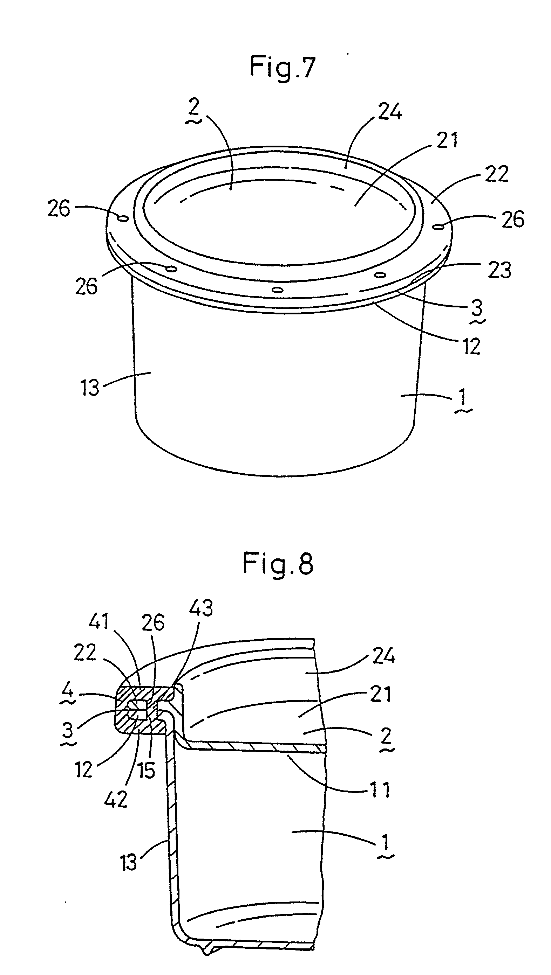

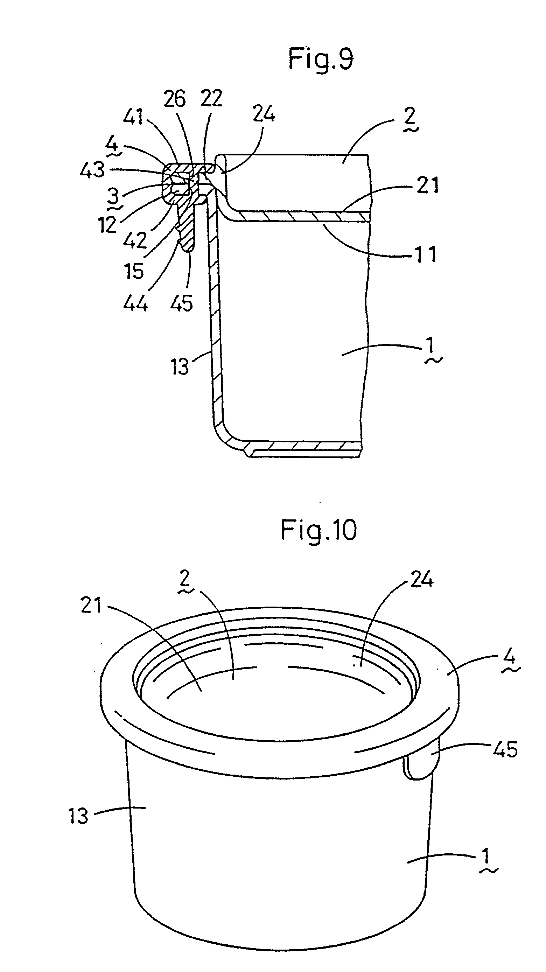

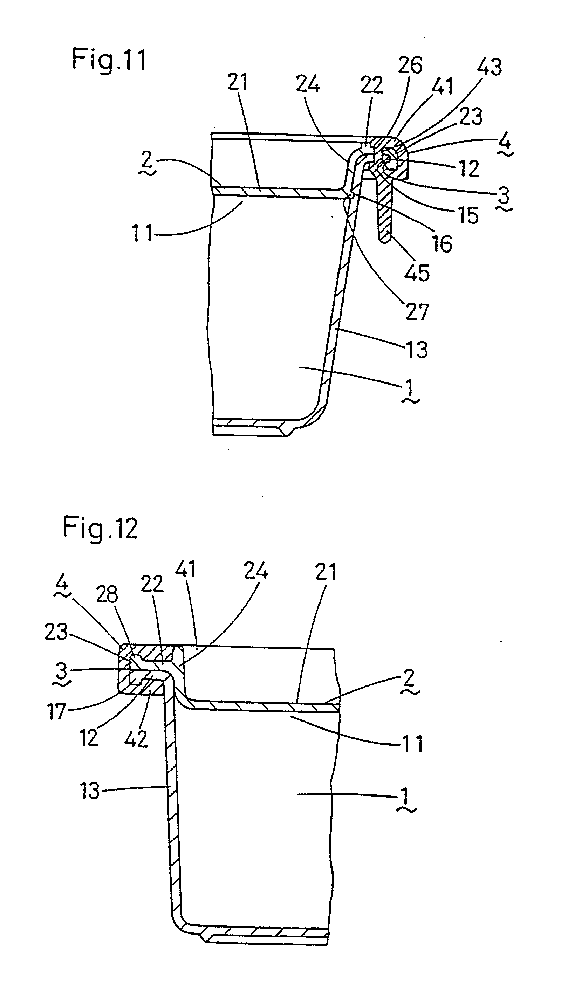

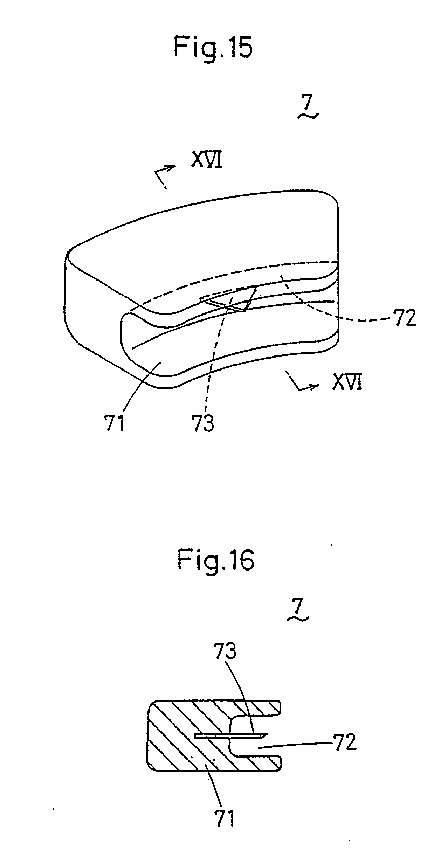

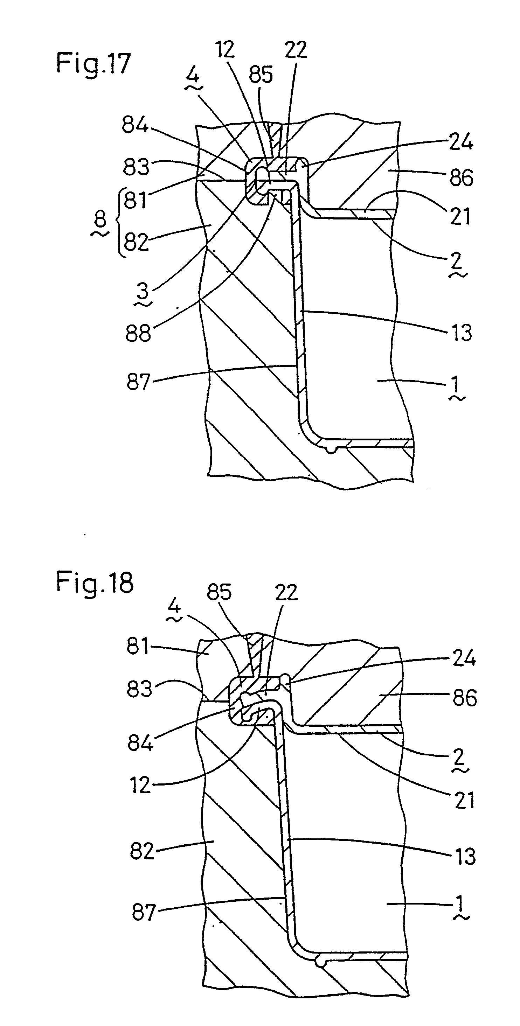

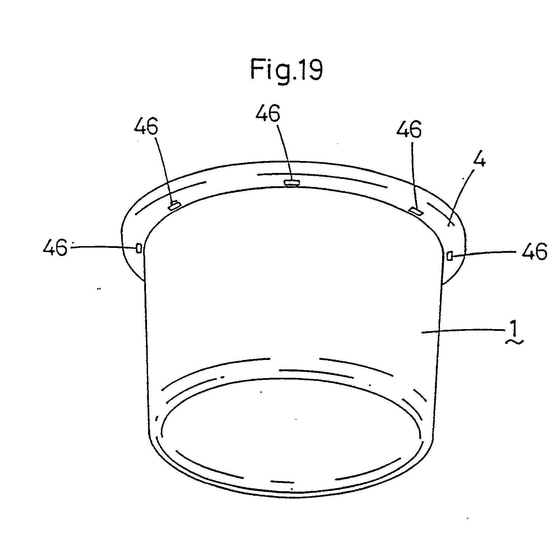

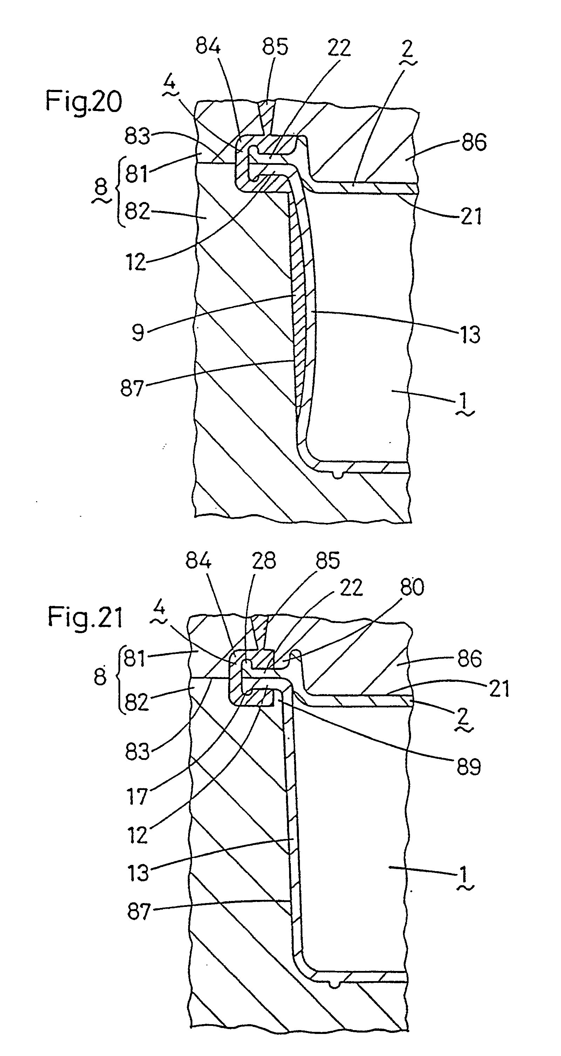

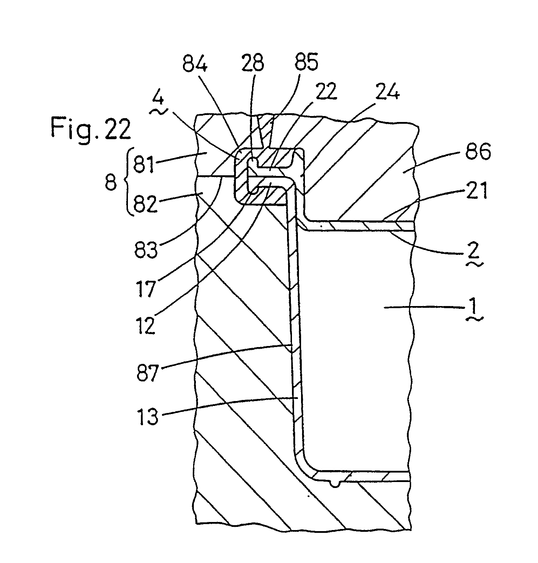

Fig. 1 is a partial section view showing an example of the closed container according to the present invention; Figs. 2 through 6 are partial section views each showing a further example of the closed container according to the invention; Fig. 7 is a perspective view showing a container prior to closing as a still another embodiment of the invention; Fig. 8 is a partial section view showing the container of Fig. 7 after closing; Fig. 9 is a partial section view showing another yet embodiment of the invention; Fig. 10 is a perspective view showing a still another embodiment of the invention; Fig. 11 is a partial section view of the closed container illustrated in Fig. 10; Figs. 12 through 14 are partial section views showing still further embodiments of the invention; Fig. 15 is a perspective view showing an example of the opening jig; Fig. 16 is an end view along the line XVI-XVI of Fig. 15; Fig. 17 is a partial section view showing an example of the injection mold to be used in the method of manufacturing a closed container in accordance with the invention; Fig. 18 is a partial section view explaining the objectionable behaviors of the flanges of the containing body and lid members in the course of injection molding; Fig. 19 is a perspective view showing a closed container from its bottom side, which container has been molded by using the injection mold of Fig. 17; Fig. 20 is a partial section view explaining the objectionable behavior of the containing body in the course of injection molding; and Figs. 21 and 22 each is a partial section view explaining a means for preventing deformation of a containing body in the course of injection molding.

The Best Mode of Working the Invention

Various embodiments of the present invention are now described with reference to the accompanying drawings.

Fig. 1 is a partial section view showing an example of the closed container according to the present invention.

This closed container comprises a containing body 1 and a lid member 2 which can be lapped over an open part 11 of said containing body 1 to close the latter, with an annular member 4 of thermoplastic resin being bonded to a joing 3 between the containing body 1 and lid member 2 to seal the joint 3. In the view, the reference numeral 13 indicates the peripheral wall of the containing body 1.

The containing body 1 is formed in the shape of a cup, which is provided with a horizontal flange 12 throughout the entire periphery of its open end. The raw material of said containing body 1 is a synthetic resin in many instances. In the practice of the invention, however, the body material is not limited thereto but may be any other material such as metal, glass, paper, a laminate of paper with metal foil or synthetic resin film. It should also be understood that the overall shape of the body 1 and the configuration of the open part 11 thereof are not limited to a circular or round one.

The lid member 2 is formed in the shape of a disk, the diameter of which is equal to the outer diameter of the flange 12 of the containing body 1 so that the lid member 2 can be lapped over the containing body 1. The raw material of this lid member 2 is a synthetic resin in many instances just as mentioned for the containing body 1, but may be any other suitable material such as metal, glass, paper or a laminate of paper with metal foil or synthetic resin film. This raw material need not necessarily be identical with that of the body 1.

The joint 3 between the body 1 and the lid member 2 in the present invention is an annular borderline formed along the periphery of the open part of the containing body 1 as the lid member 2 is set in position on the body 1 and not the area of contact between the body 1 and the lid member 2.

The annular member 4 to be bonded to said joint 3 has a width generally equal to the sum of the thickness of the flange 12 of said body 1 and the thickness of said lid member 2. Moreover, the thickness of the annular member 4 is approximately equal to the width mentioned above. Thus, the annular member 4 is a thick member and not a thin member such as, for example, a tape or film. While the raw material of said annular member 4 is a thermoplastic resin, a thermoplastic elastomer is preferred in terms of the ease of unsealing. The thermoplastic elastomer mentioned just above includes, among others, polyurethane, polyester, polyamide, olefinic, polystyrene, vinyl chloride and other elastomers, as well as polybutadiene, ethylene-vinyl acetate copolymer, ionomers, ethylene-acrylic ester copolymer and so on. These are not exclusive choices but other thermoplastic elastomers may also be employed. Among these thermoplastic elastomers, those having adequate affinity and releasability with respect to the body 1 and lid member 2 are preferred. However, such ·thermoplastic resin or thermoplastic elastomer need not have an affinity for the materials of the body 1 and lid member 2 but, in such cases, the annular member 4 is bonded to said joint 3 with an adhesive having adequate releasability or by heat sealing, high-frequency sealing or the like technique. Though not shown, the annular member 4 may be provided with a finger-hold for releasing.

To open this closed container, the annular member 4 is peeled off from the joint 3 between the body 2 and lid member 2 and the lid member 2 is then removed from the containing body 1. Where the annular member 4 is made of a thermoplastic elastomer, the whole annular member 4 can be easily pulled off from the container by the simple procedure of picking one point (where a releasing finger-hold is available) of the annular member 4 and pulling the member 4 apart.

Figs. 2 through 6 are partial section views each showing a different example of the closed container according to the invention. In these views, the like numerals as used in Fig. 1 indicate the like parts.

The closed container shown in Fig. 2 is such that the lid member 2 can be fitted into the open part 11 of the containing body 1. That is to say, the central part of the lid member 2 constitutes a depressed area 21 which ingresses into the open part 11 of the body 1 and the peripheral part (flange) 22 of the lid member 2 can be closely abutted against the flange 12 of the containing body 1. This lid member 2 has a diameter slightly in excess of the outer diameter of the flange 12 of the body 1 so that the peripheral part 23 of the flange 22 projects beyond the peripheral surface of the flange 12 of the containing body 1. The annular member 4 is disposed in contact with the bottom surface of the peripheral edge 23 of the flange 22 of the lid member 2 and also with the peripheral surface of the flange 12 of the containing body 1, with the outer surfaces thereof being flush with the peripheral surface of the flange 22 of the lid member 2 and the bottom surface of the flange 12 of the containing body 1, respectively. In this arrangement, the annular member 4 is virtually covered with the flange 22 of the lid member 2 so that the risk of the annular member 4 being destroyed by hitting other objects during transportation is minimized. Except for the foregoing, the construction of this embodiment is similar to the one illustrated in Fig. 1.

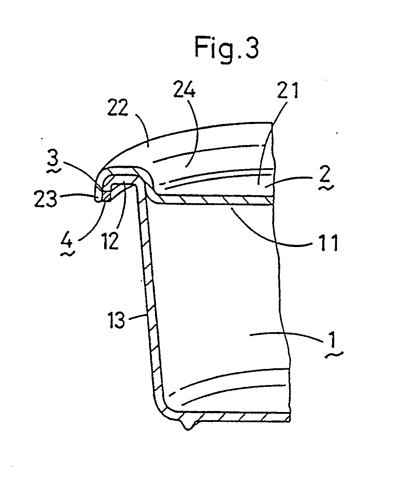

The closed container shown in Fig. 3 is similar to the one shown in Fig. 2 except that they are dissimilar in the configuration of the flange 12 of the containing body 1 and that of the flange 22 of the lid member 2. Thus, in this embodiment, the peripheral edge of the flange 12 of the containing body 1 and the peripheral part 23 of the flange 22 of the lid member 2 are both bent downwards in such a manner that the annular member 4 is covered almost completely with the flange 22 of the lid member 2. For this reason, compared with the construction shown in Fig. 2, the annular member 4 in this embodiment is better protected against damage.

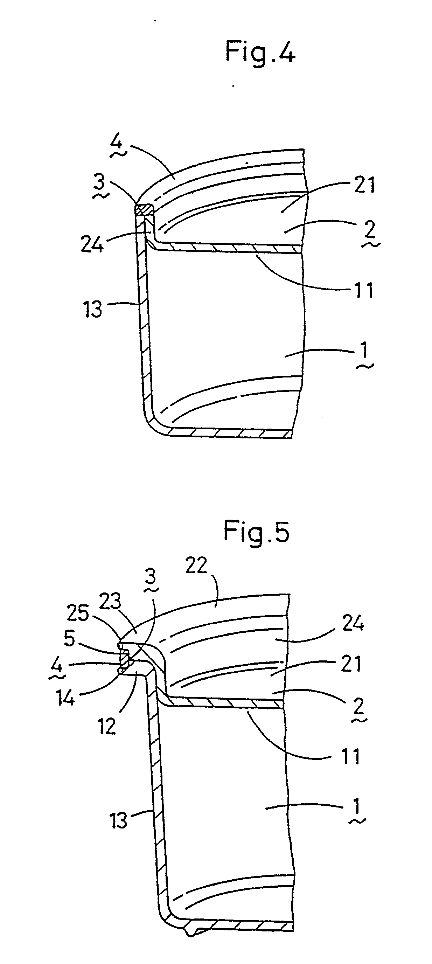

The closed container illustrated in Fig. 4 differs from the one shown in Fig. 2 only in that the flange 12 of the containing body 1 and the flange 22 of the lid member 2 are omitted. Thus, the lid member 2 is fitted to the open part 11 of the body 1 in such a manner that the upper surface of the peripheral wall 24 of the depressed area 21 of the lid member 2 is flush with the upper surface of the peripheral wall 13 of the containing body 1. The annular member 4 is bonded to both of these upper surfaces to seal the joint 3. In this arrangement, so that the lid member 2 will not fall into the bottom of the containing body 1, the peripheral wall 24 in the depressed area 21 of the lid member 2 and the peripheral wall 13 of the body 1 are both tapered toward the bottom of the body 1. Otherwise, this embodiment is similar to the preceding embodiments.

The closed container illustrated in Fig. 5 is such that the lid member 2 can be fitted into the open part 11 of the containing body 1 just as in the case of the containers shown in Figs. 2 and 3. In other words, the central part of the lid member 2 constitutes a depressed area 21 which may ingress into the open part 11 of the containing body 1 and the flange 22 of the member 2 is formed to be closely abutted against the flange 12 of the containing body 1. The diameter of the lid member 2 is equal to the outer diameter of the flange 12 of the containing body 1. The peripheral surface of the flange 22 of the lid member 2 and the peripheral surface of the flange 12 of the containing body 1 are formed with steps 25 and 14, respectively, so that an annular groove 5 will be formed along the joint 3 when the lid member is set in position. The annular member 4 is disposed within said annular groove 5 so that it will not project beyond the outer peripheries of the two flanges 12 and 22. Therefore, in this embodiment, just as in the embodiments illustrated in Figs. 2 and 3, the risk of the annular member 4 being destroyed on hitting other objects during transportation is minimized. Otherwise, this embodiment is structurally identical with the embodiment illustrated in Fig. 2.

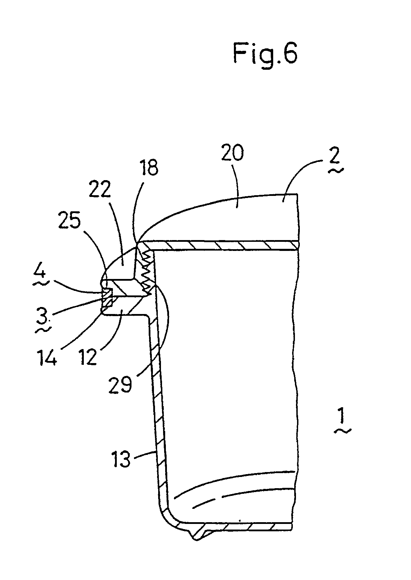

The closed container shown in Fig. 6 is similar to the one shown in Fig. 5 except that the lid member is threaded onto the containing body 1. Thus, the lid member 2 is provided with an upwardly extending dome 20 in lieu of said depressed area 21 and its inner peripheral surface is formed with a female thread 29, while the peripheral wall 13 of the containing body 1 is extended upwards beyond the flange 12 and this extension is outwardly formed with a male thread 18 engageable with said female thread 29, so that the body 1 and lid member 2 are joined to each other by means of these threads 18 and 29. In this arrangement, when the containing body 1 is to be covered again with the lid member 2 after the container has been opened, more positive re-sealing can be assured as compared with the preceding embodiments, for the two members can be fixed to each other by way of threading. Otherwise, the construction of this embodiment is identical with that of the embodiment illustrated in Fig. 5.

Figs. 7 and 8 show a further embodiment. In this embodiment, the flange 12 which is a lid-supporting part of the containing body 1 and the flange 22 of the lid member 2 are formed with the equal numbers of small orifices 15 ... and 26 ... in such a manner that when the lid member is mated with the containing body, these orifices may be lined up between the two members. The annular member 4 is so shaped that it can be brought into contact not only with the peripheral surfaces of said two flanges 12 and 22 but also with the underside of the flange 12 of the containing body 1 and the upper surface of the flange 22 of the lid member 2, that is to say in such a manner that it encloses and covers the two flanges (lid-supporting part and the contacting part) 12 and 22. Furthermore, upper and lower segments 41, 42 of the annular member 4 are interconnected at 43 through said intercommunicating orifices 15 ... and 26 ... . To open the container thus constructed, the annular member 4 is pulled away from the containing body 1 and lid member 2 just as in the case of the embodiments shown in Figs. 1 through 6 but the connections 43 of the annular member 4 which lie within said orifices 15 ..., 26 ... are torn apart. Since, in this embodiment, the two flanges 12, 12 are supported securely within the annular member 4, the annular member 4 need not necessarily be bonded to the flanges 12, 22 as it is in the embodiments shown in Figs. 1 through 6, if gas barrier property is not required. Moreover, the number and diameter of said connections 43 of the annular member 4 may be appropriately chosen with reference to the diameter, width and thickness of the annular member 4 and the strength of its material. The annular member 4 may also be provided, in an appropriate position thereof, with a releasing finger-hold 45 having antislip projections 44, 44 as illustrated in Fig. 9.

Figs. 10 and 11 show still another embodiment of the invention. Fig. 10 is a perspective view of this closed container and Fig. 11 is a view showing the same in partial section. In this embodiment, the flange 22 of its lid member 2 is similar to that shown in Fig. 3. However, the lid member 2 is formed with an annular projection 27 in an appropriate position around the depressed area 21 thereof, while the inner peripheral surface of the containing body 1 is formed with a mating groove 16 engageable with said annular projection 27. In this arrangement, reclosure of the containing body 1 with the lid member 2 after the container has been opened is made still more secure. Otherwise, the construction of this embodiment is identical with that of the embodiment shown in Fig. 9 except that the surface of the releasing finger-hold 45 of the annular member 4 is smooth.

Fig. 12 is a partial section view showing still another embodiment of the present invention. In this embodiment, the flange (lid-supporting part) 12 of the containing body 1 and the flange (contacting part) 22 of the lid member 2 are provided with mutually divergent projections 17 and 28 along the respective entire circumferences. In this embodiment, it is optional to provide the respective flanges with said orifices 15 ..., 26 ... or provide the annular member 4 with said releasing finger-hold 45.

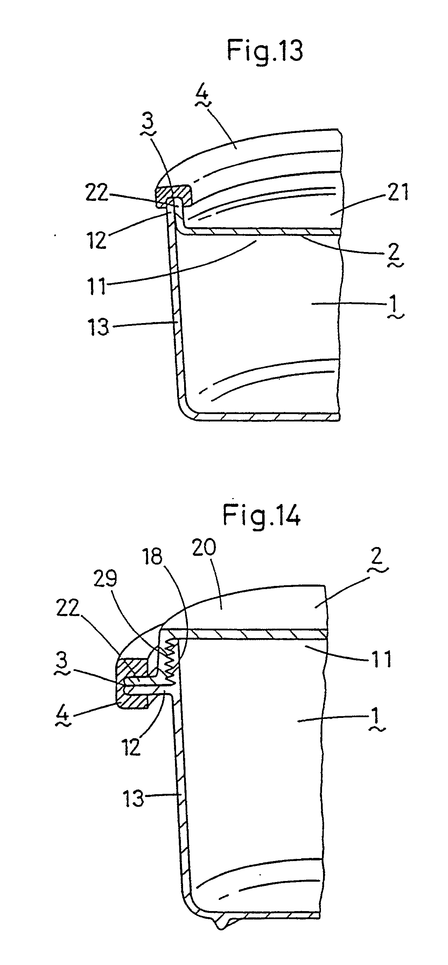

Fig. 13 is a partial section view showing another yet embodiment of the present invention. This embodiment is similar to the one shown in Fig. 4 except that the annular member 4 is disposed differently. Thus, the upper end of the peripheral wall 13 of the containing body 1 constitutes said lid-supporting part 12 and the peripheral wall 24 of the depressed area 21 of the lid member 2 constitutes said contacting part 22, with the annular member 4 enclosing and covering up these lid-supporting part 12 and contacting part 22. Thus, the forms of the lid-supporting part and contacting part in the present invention are not limited to flanges.

Fig. 14 is a partial section view showing a still further embodiment of the present invention. This embodiment is similar to the one illustrated in Fig. 6 except in the configurations of the peripheral surfaces of the two flanges 12, 22 and in the manner of disposition of the annular member 4. In this case, too, when the containing body 1 is to be reclosed with the lid member 2 after the container has been opened, the lid member 2 can be securely threaded onto the containing body 1, thus offering the advantage of secure reclosure.

In the respective embodiments described hereinbefore, the annular member 4 need not necessarily be detachably bonded to the joint 3 between the body 1 and lid member 2 but may be bonded undetachably. In such cases, the annular member 4 is incised open along the joint 3 with an opening jig 7 such as the one illustrated in Figs. 15 and 16. In the views, the reference numeral 71 indicates a jig body, 72 a guide groove formed inwardly of the inner periphery of the jig body 71, and 73 a cutter edge erected from the bottom of the guide groove 72.

The method of manufacturing a closed container in accordance with the present invention is now described. Here, the description is made with reference to the manufacture of a closed container according to the embodiment shown in Fig. 12, for instance.

Fig. 17 is a view showing the metal mold to be employed in this manufacturing method. This metal mold is an injection mold 8 consisting of a stationary segment 81 and a movable segment 82.

The parting line 83 between the stationary mold component 81 and the movable mold component 83 is designed to coincide with the plane including the joint 3 between the containing body 1 and the lid member 2, and the cavity 84 of the mold for forming the annular member 4 is disposed so as to enclose the flange 1 (lid-supporting part) 12 of the containing body 1 and the flange (contacting part) 22 of the lid member 2. The stationary mold component 81 is provided with a gate 85 communicating with said cavity 84 and also with a fixing part 86 which engages the depressed area 21 of the lid member 2 of the closed container and secure the lid member 2 in position.

On the other hand, the movable mold component 82 is provided with a container setting part 87 for accepting the containing body 1. The aforesaid gate 85 is preferably formed in a plurality of positions because the cavity 84 is so small in volume that the pressure of molten resin tends to rise too high at injection molding. It is also good practice to provide, as shown in Fig. 18, the movable mold component 82 with a supporting projection 88 extending into the cavity 84 in juxtaposition with the gate 85 so as to support the underside of the flange 12 of the containing body 1 so that the flange 12 of the containing body 1 and the flange 22 of the lid member 2 will not be deformed toward the movable mold component 82 by injection pressure when the molding composition is molded. Furthermore, where the two flanges 12, 22 are provided with orifices 15 ... , 26 ... , the gate 85 is preferably disposed away from the orifices 15 ... , 26 ... so that it will not cause occlusion of the lower open end of any orifice 15 to prevent formation of the connection 43.

While the above-described mold 8 is employed in the method of manufacturing a closed container in accordance with the present invention, the sequence of manufacturing steps is as follows. First, the containing body 1 is filled with the content (not shown) and the lid member 2 is fitted to the open part 11 of the containing body 1 to close the containing body. Then, this closed body 1 is set in the container setting part 87 in the movable component 82 of the injection mold 8. The movable component 82 is then mated with the stationary component 81. In this step, the fixing part 86 of the stationary mold 81 engages the depressed area 21 of the lid member 2 to lock the lid member 2 in position. As a thermoplastic resin (molding composition) is injected from an injection molding machine (not shown), the molding composition finds its way from a runner not shown through the gate 85 into the cavity 84 to form the annular member 4. In this manner, the flange (lid-supporting part) 12 of the containing body 1 and the flange (contacting part) 22 of the lid member 2 are enclosed by the annular member 4 to thereby seal the joint 3 between the body 1 and the lid member 2. Then, the movable mold component 82 is separated from the stationary mold component 81 and the sealed container is taken out to complete the whole process.

The closed container manufactured in the above manner is shown in Fig. 19, which indicates traces 46 ... of the supporting projections 88 of the movable mold component 82 in plural positions on the underside of the annular member 4.

Where the rigidity of the containing body 1 is not so high, it may happen as shown in Fig. 20 that the peripheral wall 13 of the containing body 1 is inwardly deformed by the overwhelming molten resin pressure to create a gap 9 between the peripheral wall 13 and the internal wall surface of the container setting part 87 of the movable mold component 82 so that the molten resin finds its may into the gap 9 to cause burs. To prevent this, it may be so arranged, as shown in Fig. 21, for instance, that the movable mold component 82 has a dam 89 adapted to contact the underside of the flange 12 of the containing body 1 as interposed between the cavity 84 and the container setting part 87 so that the above-mentioned resin pressure is borne by this dam 89 to prevent the above-mentioned deformation of the container body 1. In the view, the reference numeral 80 indicates a dam provided on the stationary mold component 81 in juxtaposed relation with said dam 89. This dam 80 on the stationary mold component not only serves to prevent leakage of molten resin into the depressed area 21 of the lid member 2 but also serves to prevent rising of the flange 12 of the containing body 1 from said dam 89 at injection molding. However, the dam 80 on the stationary side is not essential. As a means for preventing formation of said burs, that may take place at said dam 89, the height of the peripheral wall 24 of the depressed area 21 (depth of the depressed area 21) may be set to a suitable dimension so that the bottom of the depressed area 21 will be located below the cavity 84 so as to support the upper end portion of the peripheral wall 13 of the body 1 from inside by the peripheral wall 24 of the depressed area 21.

Generally the same manufacturing method as described above is applicable to the other closed containers than the container of Fig. 12, provided that the injection mold 8 is modified so as to be complementary with the corresponding containing body 1, lid member 2 and annular member 4.

It should also be understood that while the closed container is cup-shaped in the embodiments described hereinbefore, it is not limited to such shape but may for example be in the shape of a bottle.

Industrial Applicability

Thus, in accordance with the present invention, there can be provided a closed container which insures perfect sealing between the container body and the lid, is safe and easy to open, and permits reuse of the lid after opening. As such, the present invention is suitable for application to containers for processed foods, beverages, waxes, paints, adhesives, drugs, cosmetics, etc. and particularly those which are not used up at a time.

**Claims**

1. A closed container comprising a containing body and a lid member which can be lapped over or fitted to an open part of the containing body, characterized in that the open part of the containing body is closed with the lid member and the joint between the body and lid member is sealed by an annular member of thermoplastic resin bonded thereto.

2. The closed container of claim 1 wherein said thermoplastic resin is a material having affinity for materials of which the containing body and the lid member are respectively made.

3. The closed container of claim 1 wherein said thermoplastic resin is a thermoplastic elastomer.

4. The closed container of claim 3 wherein said thermoplastic elastomer is a material having affinity for materials of which the containing body and the lid member are respectively made.

5. The closed container of claim 1 wherein said annular member is bonded to the joint between the containing body and the lid member through an adhesive.

6. The closed container of claim 3 wherein said annular member is bonded to the joint between the containing body and the lid member through an adhesive.

7. The closed container of claim 1, 2, 3, 4, 5 or 6 wherein said annular member is provided with a releasing finger-hold.

8. A closed container comprising a containing body and a lid member to be lapped over or fitted to an open part of the containing body, characterized in that the containing body is provided with a lid-supporting part of predetermined width along the peripheral portion of the open part and the lid member is provided with a contacting part to be abutted against said lid-supporting part along its peripheral portion, with said lid-supporting part and contacting part being enclosed by an annular member of thermoplastic resin after the lid member has been fitted to the containing body.

9. The closed container of claim 8 wherein said thermoplastic resin is a resin material having affinity for materials of which said containing body and lid member are respectively made.

10. The closed container of claim 8 wherein said thermoplastic resin is a thermoplastic elastomer.

11. The closed container of claim 10 wherein said thermoplastic elastomer is material having affinity for materials of which said containing body and lid members are respectively made.

12. The closed container of claim 8 wherein said annular member is bonded to the lid-supporting part of the containing body and the contacting part of the lid member through an adhesive.

13. The closed container of claim 10 wherein said annular member is bonded to the lid-supporting part of the containing body and the contacting part of the lid member through an adhesive.

14. The closed container of claim 8, 9, 10 or 11 wherein said lid-supporting part and said contacting part are provided with equal numbers of orifices as disposed in equispaced relation and upper and lower segments of the annular member are interconnected through the orifices which are mated between said lid-supporting part and contacting part in closure of the container.

15. The closed container of claim 8, 9, 10, 11, 12 or 13 wherein said annular member is provided with a releasing finger-hold.

16. The closed container of claim 14 wherein said annular member is provided with a releasing finger-hold.

17. The closed container of claim 8, 9, 10 or 11 wherein said lid-supporting part and contacting part are provided with mutually divergent projections at the respective peripheral portions thereof.

18. The closed container of claim 17 wherein said annular member is provided with a releasing finger-hold.

19. A method of manufacturing a closed container characterized by filling a material to be packaged into a containing body, closing an open end of said containing body by lapping or fitting a lid member over or to the open end, setting the containing body with the lid member in an injection mold having an annular cavity in a position corresponding to a joint between said containing body and lid member, injecting a thermoplastic resin into said cavity of the mold to form an annular groove sealing said joint between said containing body and lid member.

20. A method of manufacturing a closed container characterized by filling a material to be packaged into a containing body having a lid-supporting part of predetermined width along the peripheral portion of its open part, lapping or fitting a lid member having a contacting part for engaging said lid-supporting part along its peripheral part over or to said open part of the containing body to cover the container, setting the covered containing body in an injection mold having a cavity configured to enclose the lid-supporting part of the containing body and the contacting part of the lid member, injecting a thermoplastic resin into said cavity of the mold to form an annular member enclosing said lid-supporting part and contacting part.

21. The method of manufacturing a closed container as claimed in claim 19 or 20 which is further characterized in that said thermoplastic resin is a thermoplastic elastomer.

# Fig. 1

# Fig. 2

## Fig.3

# Fig.4

# Fig.5

# Fig.6

## Fig.7

## Fig.8

## Fig.9

## Fig.10

Fig.11

Fig.12

## Fig.13

## Fig.14

## Fig.15

Z

XVI

72

XVI

71    73

## Fig.16

Z

73

72

71

Fig.17

Fig.18

## Fig.19

Fig.20

Fig.21

Fig. 22

# INTERNATIONAL SEARCH REPORT

International Application No PCT/JP90/01474

## I. CLASSIFICATION OF SUBJECT MATTER (if several classification symbols apply, indicate all) [6]

According to International Patent Classification (IPC) or to both National Classification and IPC

Int. Cl$^5$  B65D45/32, B65B51/02

## II. FIELDS SEARCHED

Minimum Documentation Searched [7]

| Classification System | Classification Symbols |
|---|---|
| IPC | B65B51/02, 7/16, B65D45/32, 77/20 |

Documentation Searched other than Minimum Documentation
to the Extent that such Documents are Included in the Fields Searched [8]

| | |
|---|---|
| Jitsuyo Shinan Koho | 1926 - 1990 |
| Kokai Jitsuyo Shinan Koho | 1971 - 1990 |

## III. DOCUMENTS CONSIDERED TO BE RELEVANT [9]

| Category* | Citation of Document, [11] with indication, where appropriate, of the relevant passages [12] | Relevant to Claim No. [13] |
|---|---|---|
| Y | JP, B1, 51-8073 (Furan Pack), March 13, 1976 (13. 03. 76), Columns 1 to 2 | 1-18 |
| A | JP, Y1, 34-9279 (Shinshiro Otaki), June 17, 1959 (17. 06. 59), Columns 1 to 2 | 19-21 |
| A | JP, A, 52-101181 (Nichiai Acetylene K.K.), August 24, 1977 (24. 08. 77), Column 6 | 14, 16 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| December 19, 1990 (19. 12. 90) | January 14, 1991 (14. 01. 91) |

| International Searching Authority | Signature of Authorized Officer |
|---|---|
| Japanese Patent Office | |

Form PCT/ISA/210 (second sheet) (January 1985)